# EUROPEAN PATENT SPECIFICATION

(11) **EP 1 513 311 B1**
(45) Date of publication and mention of the grant of the patent: **16.03.2011**
(21) Application number: 03019625.7
(22) Date of filing: 04.09.2003
(51) Int. Cl.: H04L 29/06

(54) **Method and system for controlling service access**
Verfahren und System zur Überwachung des Dienstzuganges
Procédé et système pour controller l'accès aux services

(43) Date of publication of application: 09.03.2005
(73) Proprietor: Harman Becker Automotive Systems GmbH, 76307 Karlsbad (DE)
(72) Inventor: Kuz, Volker, 38106 Braunschweig (DE); Behrens, Ralph, 31174 Schellerten (DE); Behrens, Grit, 31174 Schellerten (DE)
(74) Representative: Bertsch, Florian Oliver

(56) References cited:
- EP-A- 1 143 660
- EP-A- 1 244 008
- WO-A-02/39692
- US-B1- 6 237 093
- PETER GRAVESTOCK: "Self-Help for Bugs in the Field" CIRCUIT CELLAR, September 1999 (1999-09), pages 1-4, XP002208351

## Description

The invention relates to a method for controlling service access of client terminals to a server, wherein the terminals and the server are connected via a communication network, and to a system therefor. The invention relates particularly to method of controlling service access of navigation devices to a portal offering different services to the user of the navigation device.

### Related Art

The newly developed navigation devices already comprise additional telecommunication features such as a GSM modem. With the use of these additional telecommunication features the access to information provided on different communication networks has become easier. Nowadays, handheld digital wireless devices, e.g., navigation devices, mobile phones, pagers, two-way radios, smart phones, and communicators, are able to communicate with each other and are able to exchange data by using a common communication protocol and application environment. One possible communication protocol used for the communication of wireless devices with, e.g., the internet is WAP (Wireless Application Protocol) which is an open global specification that empowers mobile users with wireless devices to easily access and interact with information provided on a server on the internet.

The WAP technology can also be used for different services which could be useful for the user of a navigation device, these services providing the user of the navigation device with data and comprising at least one of location-based services, traffic dialogue services, emergency call services, services provided by car manufacturers, if the navigation device is provided in a vehicle, services such as finding a special hotel or a certain restaurant, etc.

These services may be accessible by a communication network, e.g., the internet. For some of these services the user will have to pay to get the information provided by certain services. It is possible that some of these services should be free of charge for certain client terminals, whereas other client terminals have to pay for exactly the same services, or that only certain terminals or navigation devices should have the right to access the services provided on the server or only a special group of users should be able to access these services.

The European patent application EP1 143 660 describes a system for automatically updating policy configuration to remote users, without requiring reconfiguration of the terminal.

Therefore, a need exists to control the accessability of client terminals to a server on which services are provided.

### Summary of the invention

This need is met by a method as described in claim 1 and by a system according to claim 28.

In the dependent claims preferred embodiments of the present invention are described.

According to the present invention a method is provided According to claim 1.
Due to the fact that the configuration data of the client terminals are generated or modified on the server and then transmitted to the client terminals, the operator of the server can easily control the access of different client terminals to the services provided on the server. The operator of the server can determine the capabilities of the different terminals by enabling, disabling different services for different client terminals. Different services, for which the user may have to pay can be enabled for certain terminals over a certain test period, other services for which the user has to pay can be disabled or basic services which are free of charge can be made available for all users of the server.

According to a preferred embodiment the admissibility of a service request received from a terminal is verified on the server, based on the associated configuration data and/or access rights of the terminal. Furthermore, the admissibility of a service response received from the server can be verified based on the stored configuration data. The operator of the server can more easily control the enabling or disabling of services requested from the server by a client terminal. By comparing the service request to the associated configuration data of the client terminal, the server can decide whether the stored configuration of the client terminal enables the terminal to request certain services. By comparing the service request to the associated access rights the server can decide whether the access rights enable the client terminal at all to access the server. Furthermore, every client terminal may also have an account on which, e.g., a certain sum of money is provided which will be used when the user of the client terminal requests a service for which the user has to pay a certain amount of money. For the case that no money remains on the account, the server can disable certain capabilities of that client terminal, e.g., the server can decide that this client terminal is not allowed any more to request data from services which have to be paid for. According to another embodiment, the terminal can also verify the admissibility of a service response based on the configuration of the client terminal. After having received a certain service provided from the server, the terminal checks whether it is able to process the data coming from the server.

In order to check the admissibility of a service request, the server compares a service type identifier associated to the received service request with the stored access rights and or terminal capabilities of the requesting terminal in order to determine the admissibility of the service request. The client terminal itself can also compare a service type identifier associated to the received service response with the stored access rights and/or terminal capabilities in order to determine the admissibility of the service response. This verification of the received service response can be necessary in order to avoid that the service response is interpreted in the wrong way or in order to avoid that the processing of the received service data leads to an undefined status in the client terminal or to an error within the client terminal which cannot be removed.

The modified configuration data may be transmitted to the corresponding terminal when the terminal registers with the server prior to requesting a service. There exists the possibility of changing the configuration data on the server without the client terminal being connected to the server. As will be described in more detail below, the user of the client terminal may use another terminal, e.g. a personal computer, and another communication network, e.g. the internet, in order to access the server and to change the configuration data. If this is the case, this modified configuration data is transmitted to the corresponding terminal when the terminal registers with or contacts the server for the first time after the configuration data has been changed. The modified configuration data may be transmitted to the corresponding terminal by a data messaging service, e.g., SMS (Short Message Service). In this case a binary SMS is sent to the terminal, and the terminal will analyze the message and the configuration data will be retained automatically.

Another possibility of transmitting changed configuration data to the terminal is the transmission of the modified configuration data to the corresponding terminal, when the terminal requests a configuration data update. The terminal may have received a message, such as an SMS containing the information that updated configuration data are available on the server, so that the terminal will log on the server and will request the updated configuration data. This is the case when a message indicating a configuration data modification is sent to the corresponding terminal, modification is sent to the corresponding terminal, initiating a configuration data update request. According to another possibility, the SMS will initiate a WAP call to the server, the updated configuration data being transmitted upon the log-on procedure of the terminal.

The configuration data for a terminal on the server is modified based on a configuration data editing process performed on the terminal communicating with the server. In this example the client terminal and the server communicate with each other by using the WAP technology. Client terminal logs on the server and chooses its configuration among different possible configurations. These different configuation possibilities may be provided on a website which is communicated to the client terminal by the WAP technology.

However, the configuration data for the terminal on the server can also be modified based on a configuration data editing process performed on a different terminal communicating with the server via a second communication network. This second communication network may be a TCP/IP-based communication network, e.g. the internet. In this embodiment the user may use another terminal, e.g. a normal computer terminal, and may use the internet to access the server. After a log-on procedure the user may choose the configuration of a corresponding client terminal. In this example, the client terminal itself needs not to be connected to the server. The next time the client terminal accesses the server, the updated configuration data as chosen by the user via the internet will be transmitted to the client terminal. In the embodiment in which the client terminal and the server directly communicate with each other by using the WAP technology, the first communication network is a telecommunication network, the second network being the TCP/ IP-based communication network. However, it should be understood that any other communication network could be used.

According to another embodiment of the invention the terminal stores server identifiers associated to service type identifiers and compares a received server identifier for service response with the stored server identifers associated to the service type identifier of the service response in order to determine the admissibility of the service response. These service identifiers help when the client terminal wants to determine whether the received configuration and/or service data come from the right server. When the service comes from a non-authorized server, the client terminal will not analyze the received data. This is to prevent that services originating from other servers of another company may change the configuration data of a client terminal. As the service may comprise the transmission of position data to the server or the transmission of data relating to the current status of the vehicle in which the client terminal may be installed, these relevant information will not be transmitted to an authorized person.

According to another embodiment of the invention, it may be checked whether the configuration of the terminal was changed, or whether the terminal contacts the server for the first time, or whether the terminal was reset, when the terminal logs on the server. It may happen that the power supply of the client terminal has been cut, or that a factory reset was done in the client terminal. In this case a flag is set in the terminal, which will be transmitted to the server, when the client terminal logs on to the server. When the server receives the data from the client terminal together with the flag, it knows that no configuration data are available on the client terminal and will transmit a standard configuration to the terminal.

According to a preferred embodiment of the invention the client terminal has to be registered at the server when it contacts the server for the first time. For this registration the type of the used terminal has to be chosen and transmitted to the server. Furthermore, an identification number of the terminal has to be transmitted to the server. In the next step, the server generates a log-in password and transmits it to the terminal, the terminal retaining this log-in password. This registration can be done by using the client terminal itself using the WAP technology and the first telecommunication network. However, the registration can also be done by using the TCP / IP based communication network, e.g., the internet.

According to a preferred embodiment the configuration data of the registered terminals is stored on the server together with the identification number of the terminal. If this is the case, the server always knows the configuration of the different terminals. When a client terminal requests a service from the server, the server can use the stored configuration data of the identified terminal in order to determine whether the acces rights of the terminal are in correspondence with the requested service.

After the identification of the terminal the transmitted identification number and the corresponding password may be compared to the respective data stored on the server. If the transmitted identification number and the corresponding password coincide with the data stored on the server, the terminal is enabled to change its configuration. With this feature it is possible to check whether the terminal is registered. Once the terminal is known, the terminal may be able to change its configuration.

Before the server transmits a requested service to the terminal, the latter has to be identified. The client terminal may be identified with the following steps being carried out. The server generates an identification service and this identification service is transmitted to the client terminal where the identification service is carried out. This identification service may be transmitted to the terminal automatically, when the terminal contacts the server, and is carried out on the terminal. This means that an identification number is requested from the terminal together with a password. This is done automatically by the identification service when the service is received at the terminal. In the next step, the identification number of the client terminal and the password are transmitted to the server.

When the user of a client terminal wants to change a configuration of the terminal or wants to build up a configuration, the user of the terminal chooses a configuration by choosing the configuration among the different configuration possibilities provided by the server, the server transmitting the chosen configuration data to the terminal, the terminal retaining the the chosen configuration. The different configuration possibilities may be chosen by using check boxes which are provided on a website of the server. It should be understood that the determination of the configuration can be done by using the client terminal itself which is communicating with the server via the WAP technology. However, the configuration can also be determined by using a computer terminal and the internet.

Once the configuration is determined, the server may check whether the configuration chosen by the user of the client terminal is valid for that client terminal by comparing the identification number of the terminal with a predetermined set of services which are allowed for this identification number. By providing a predetermined set of services for each identification number, the operator of the server can control the accessability of the different services by the different client terminals. If the terminal is a navigation device which is to be used in a vehicle and the services provided to the navigation device are at least one of location based services, traffic dialog services, emergency call services, route finding services, hotel finding services, the operator of the server may want to differentiate between different navigation devices. The navigation devices are nowadays sold to different car manufacturers. Each of the different car manufacturers may have an own portal which the manufacturer uses for providing services to the clients. By providing a table comprising the identification number of the terminal and a predetermined set of services for each terminal the operator can differentiate which terminal will have access to which service information.

During the identification of the client terminal the client terminal may transmit the MIME Types, which it can decode, to the server. The MIME Types (Multi-purpose Internet Mail Extensions) are predetermined types of data with predetermined extensions. They are necessary to transport different types of data in a communication network and to make the data legible for the different clients. With the transmission of the MIME Types to the server, the server will provide the service together with the corresponding data by using a MIME Type which the terminal can process, so that the client terminal is able to "read" the configuration data or the transmitted service data.

The configuration data may comprise the services which the terminal can process. When a user of a client terminal chooses a certain configuration, he or she may choose one or more services among the different services provided on the server. These services could be services free of charge or pay-per-access services or pay-per-month services. If the user wants to choose a pay-per-access service or a pay-per-month service, the server has to know the exact data of the client terminal in order to charge the client for the used services.

It may be the case that certain terminals are not allowed to use a special service at all, or are only allowed to use non-paying services. This is, e.g., the case if a first car manufacturer, for whom the navigation device is produced, has a first server with a portal which is used to provide the clients of this first car manufacturer with additional service information. Another car manufacturer may have a different portal providing their own clients with information. Therefore, the possibility exists that a terminal has no access rights to services provided on one server. If the car manufacturers make an agreement that the clients of their navigation device may use the services provided on the other server, there exists the possibility of changing the configuration of the corresponding terminals. Therefore, a terminal which has no access rights to services provided on a server is informed that such terminal will now be able to access the server and that an enabling service comprising enabling configuration data is provided on the server. This may be done by a letter to the user of the client terminal comprising, e.g., a password for accessing the server. This may also be done by an SMS sent to the client terminal from the server. The client terminal is informed that an enabling service with enabling configuration data is provided on the server, so that the terminal will access the server to request that enabling service. The enabling service is then transmitted to the terminal, comprising the enabling configuration data, and the terminal is configured with enabling configuration data. Due to the fact that the configuration data are all controlled on the server, the operator of the server can choose different client terminals and can determine or change their capabilities.

As mentioned above, the individual terminals and the server can communicate with each other by using the SMS technology. According to a further aspect of the invention, the client terminal is able to use the SMS technology. The SMS technology is different, e.g., from the WAP technology, in that a permanent connection between the server and the client terminal is not necessary. According to a second aspect, services can also be initiated by the server and not only by the client terminal. By using the SMS technology it is therefore possible that the server calls the client terminal in writing an SMS, the SMS comprising configuration data as described above. When the SMS is received at the client terminal, this SMS may cause different actions to be carried out on the client terminal. According to one embodiment the SMS comprises a service "request position". By this "request position" service the client terminal sends the position data obtained from the navigation device to the server or any other terminal indicated in the message. This may happen once or periodically, e.g. for a fleet management of several vehicles. SMS further comprises the telephone number to which the response SMS comprising the position data has to be sent. Therefore, the SMS message may comprise data which actively control the client terminal and which can initiate different steps to be carried out on the client terminal.

According to another embodiment of the invention the SMS sent to the server comprises, in addition to the position, other status information of the vehicle in which the navigation device is installed, e.g., velocity, ignition status, mileage status, or any other information provided in the vehicle. Together with the operating status of the vehicle an identification number of the vehicle is transmitted to the server, so that the server can exactly determine the status of different vehicles. In this case, the SMS initiates the transmission of a status report of the vehicle to the server.

According to another aspect of the invention the SMS sent to the terminal may comprise the configuration data as described above, when the configuration of a client terminal has been changed. Another possibility is a SMS sent from the server to the navigation device, comprising the inquiry what configuration the client terminal actually has.

In order to avoid that any server can send an SMS requesting confidential data, e.g., position or vehicle status, and in order to avoid that the terminal responds to this SMS, the client terminal comprises a list of trusted SMS servers. This means that only services originating from a server which is comprised in the list of trusted SMS servers will be analyzed by the client terminal. This list of trusted SMS servers could be incorporated in the configuration data sent by the server. The list of the trusted SMS servers could also be controlled via an SMS service which has an own service type identifier. In conclusion, it can be guaranteed that only predetermined servers can receive or request data from the respective client terminals.

The invention further relates to a system According to claim 27.
With the application enabling device provided on the server it is easy to control the capabilities of the different terminals, as the "server" itself can decide what access rights the different terminals have, the configuration data of these access rights being created on the server, transmitted to the client terminal and retained on that client terminal.

The first storage unit of the system may further comprise an identification number and the corresponding password of the terminal. Furthermore, it may comprise the identification number of the terminal together with a predetermined set of services which are allowed for this terminal, so that the server can decide which client terminal is able to receive what kind of information.

The application enabling device may comprise the different services which can be chosen by the user of the terminal.

### Brief description of the drawings

Specific embodiments of the invention will now be described by way of examples with respect to the accompanying drawings, in which
Fig. 1 shows a system for controlling services access, incorporating features of the present invention;
Fig. 2 shows the different steps to be carried out for changing the configuration of a client terminal;
Fig. 3 shows in further detail the identification of the client terminal on the server;
Fig. 4 shows in further detail the registration steps for the client terminal at the server;
Fig. 5 shows an example for changing the configuration of the client terminal,
Fig. 6 shows a flowchart how the server and the client terminal check the respectively transmitted data after having requested a certain service from the server, and
Fig. 7 shows an example of how a client terminal can access the services provided on the server which had no access rights before.

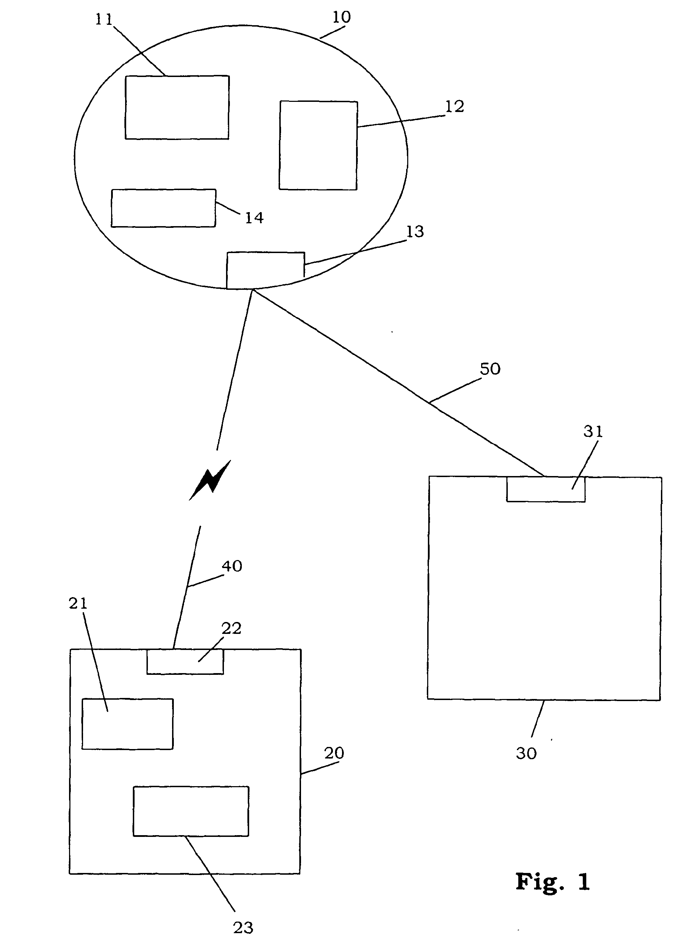

Fig. 1 schematically shows a system for controlling service access for services provided on a server 10. A client terminal 20 which, in the present embodiment, is a navigation device which can be used in a vehicle accesses the server 10 via a first communication network 40 which, in the present example, is a telecommunication network. It should be understood that the present invention is not limited to a navigation devices accessing the server. It is applicable to any kind of mobile terminal which communicates with a server using wireless communication techniques. In the present case the server 10 may be accessible over the internet. The server 10 comprises a storage unit 11 on which the services for the client terminal are provided. These services comprise additional information that can be of help in the navigation device 20 and may comprise services, e.g., location-based services, traffic dialog services, emergency call services, route calculating services, diagnostics services for a garage, services for finding restaurants or hotels, etc. The information provide on the storage unit 11 of the server can comprise any information that can be helpful for the user of the navigation device and which is normally not provided on the navigation device 20 itself, as the information stored on the server 10 changes more rapidly than the pure road map data provided on the navigation device 20 for generating a road map. The navigation device 10 further comprises an application enabling device 12 which can be used for changing the configuration of the client terminal 20.

There exist different categories of services provided on the server 10. The first category comprises services which are free of charge, so that these services can be used by every client terminal accessing the server. However, there exists a second type of services, for which the user has to pay. These services can be pay-per-access services or pay-per-month services, or services which the user can only use for a certain period of time, e.g. a test period of one month.

The client terminal 20 comprises a second storage unit 21 for storing the configuration data provided by the server 10. The client terminal further comprises a transmitting/receiving unit 22 for communicating with a transmitting/receiving unit 13 of the server 10. The server 10 and the client terminal 20 communicate with each other using the first communication network 40 which is a telecommunication network in the present embodiment. For the data exchange between the two devices 10 and 20, the wireless application protocol WAP is used, so that the information provided from the serve can be interpreted by the navigation device 20. It should be understood that any other wirless communication protocol could be used for the communication between these two devices.

It should be understood that the navigation device 10 comprises many other features known from nowadays navigation devices, which are known in the art. In the present context, however, only the components needed for an understanding of the invention are described in detail.

The functioning of the system shown in Fig. 1 is described by way of an example. The user of the navigation device 20 wants to know a restaurant which is in the neighbourhood of a predetermined destination. If the client terminal 20 is registered at the server (as will be explained in detail later on), the client terminal 20 can access the server and ask for the service of finding a certain restaurant in the neighbourhood of a certain location. This may be a service for which the user has to pay. Therefore, the client terminal has to be registered and has to be enabled to choose that service. This will be explained in detail below. A control unit 14 of the server controls the functioning of the server, and if the client terminal is allowed to use the chosen service, the service data will be transmitted to the client terminal 20 and will be analyzed on the client terminal by a control unit 23 provided on the navigation device. If the client terminal 20 is not allowed to choose the service for which money is necessary to get the relevant information, the client terminal 20 can access the application enabling device 12 for enabling or disabling different services provided on the server. The changed configuration data comprising the information that the user of the client terminal 20 will now have different access rights are generated on the server 10 and transmitted to the navigation device 20. The user of the navigation device may be able to change the configuration of the client terminal by himself, but any change of the configuration is under control of the server which manages the configuration data and/or the access rights of the terminal. As will become clearer from the following description, the fact that the configuration data are created on the server and are transmitted to the client terminal can be used in order to control the service access of different client terminals.

The configuration of the client terminal 20 needs not to be changed by the client terminal 20 itself. The configuration of the client terminal 20 may also be changed by accessing the server 10 via a different terminal 30 which may be a normal computer terminal. This computer terminal 30 may be connected to the internet, so that the computer terminal 30 and the server 10 communicate with each other by using a TCP/IP based communication network 50. The computer terminal 30 may log on to server 10, transmitting a data request by a transmitting/receiving unit 31 of the computer terminal 30. The computer terminal 30 may then access the application enabling device 12 of the server 10 and may change the configuration of the client terminal 20. The next time the client terminal 20 accesses the server, the changed configuration data will be transmitted to the client terminal and stored on the second storage unit 21.

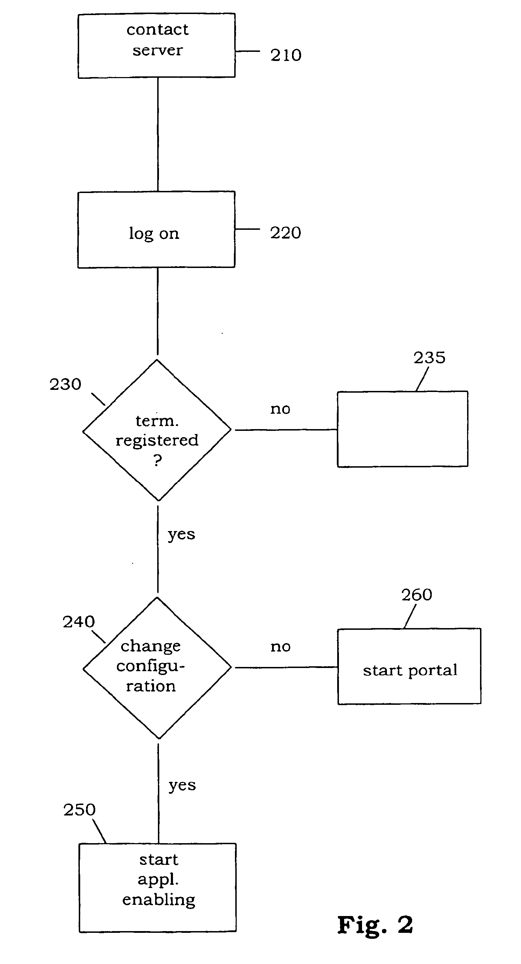

In Fig. 2 different steps for changing the configuration of a client terminal or for accessing services provided on the server will be explained in more detail. In a first step 210 the server will be contacted, e.g., by calling the corresponding URL (e.g., http://www.[name of the server]. com) of the server. In a next step 220 the client terminal 20 is logged on to the server 10. In step 230 it is checked whether the terminal has already registered at the server or not. In the case that the terminal is not registered at the server there are different possibilities for a step 235. First of all the portal provided on the server can be started in a standard configuration in which pay-per-access services or pay-per-month services cannot be chosen by the user of the terminal. As a second alternative an error message can be generated in step 235, which notifies the user that a registration is necessary, or in step 235 a registration procedure is started. If the terminal is already registered, it is checked in step 240 whether the configuration of the terminal 20 is to be changed or not. If the configuration is to be changed, the application enabling device is started in step 250. With the application enabling device the configuration of a client terminal can be changed and certain services provided on the server can be enabled/disabled, etc. If this configuration is not to be changed in step 240, the portal is started in step 260. If the server is contacted by the client terminal 20, the WAP portal is started, so that the information provided on the portal is displayed to the user of the client terminal.

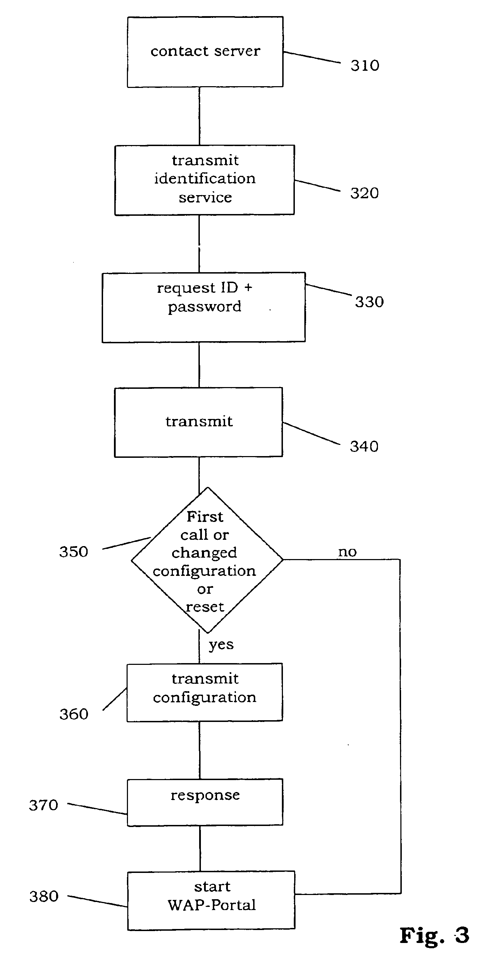

In Fig. 3 the identification of the client terminal and the changing of a configuration is shown in more detail. In step 310 the server is contacted. After the contacting of the server, the server generates an identification service requesting an identification number of the client terminal and a system password of the client terminal. This identification service is transmitted to the navigation device in step 320, and in step 330 the identification service is carried out requesting the identification number and the password of the client terminal. This identification number and password are provided on the client terminal and do not have to be entered by the user. In a step 340 the requested identification number and password are transmitted to the server. If the identification number and the password fit together, the portal is started (not shown). Therefore it is necessary that the different identification numbers of the terminals are stored together with their respective password on the server 10, e.g., on the storage unit 11.

In step 350 the server checks whether the client terminal contacts the server for the first time or whether the configuration data has been changed since the terminal contacted the server the last time. This could, e.g., be the case when the user of the client terminal uses the computer terminal 30 without starting the client terminal 20, accesses the server 10 via the communication network 50 (Fig. 1), and changes the configuration of the client terminal 20. If this is the case, the configuration data are provided on the server, and the next time the client terminal contacts the server, these configuration data are transmitted to the client terminal step 360. In step 350 it is further checked whether the terminal was reset after the last log-in. In the case of a reset of the terminal, a flag is set in the terminal, the presence of the flag being transmitted to the server during the log-on procedure. With the presence of the flag the server knows that the terminal has been reset. If the result of the verification of step 350 is that the client terminal 20 contacts the server 10 for the first time or a reset took place, a standard configuration may be transmitted to the client terminal in step 360. In step 370 the client terminal acknowledges that it received the transmitted configuration data and stores it on the storage unit 21 of the client terminal. In step 380 the portal is started and the user can choose the service he or she will need or can change its configuration by starting the application enabling device.

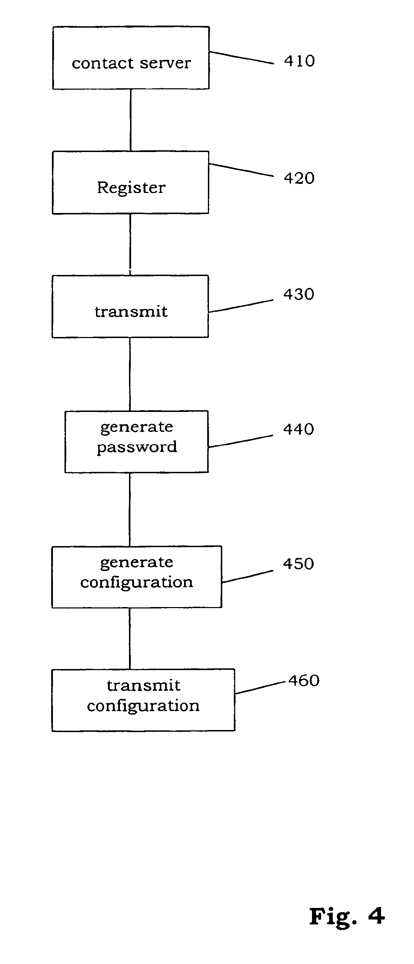

When the client terminal is not yet registered at the server, a registration procedure has to be carried out first, which is shown in Fig. 4. In step 410 this server is contacted. This contacting of the server can be done either by the navigation device 20 or by the computer terminal 30. If this first step is carried out by using the client terminal 20, the telecommunication network 40 is used, whereas the TCP/IP based communication network 50 is used, when the computer terminal 30 is used for contacting the server. In the next step the client terminal has to be registered (step 420). This means that the used type of client terminal and the identification number of the terminal have to be identified and transmitted to the server 10 in step 430. In step 440 the receiving of the transmitted data is acknowledged and a password for this special client terminal is generated. In step 450 configuration data are generated which could be a standard configuration which is used for the terminal that accesses the server 10 for the first time and has the right to access it. Starting from this standard configuration the user of the terminal can change the configuration of the terminal step by step. In step 460 the configuration is transmitted to the navigation device. This can be done by using the short message services technology (SMS), the SMS message containing the configuration data of the client terminal 20. The registration and the transmitting of the configuration can be initiated by the client terminal itself by using the WAP technology or by using the computer terminal 30 and the internet. This means that the client terminal is able to receive SMS massages and is able to decode the information comprised in the message.

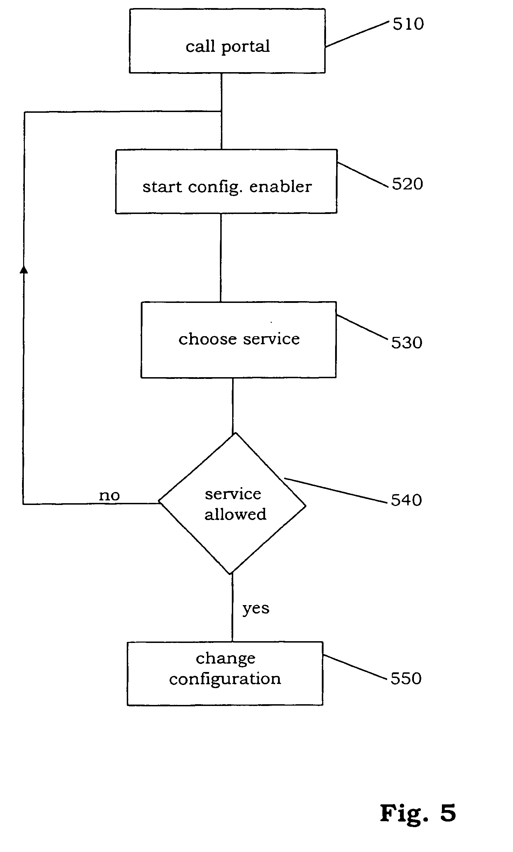

In Fig. 5 the different steps for changing the configuration of a client terminal is shown in more detail. When the portal on the server has been called in step 510, i.e. the client terminal is identified together with its password, the configuration enabling device can be stared in step 520. In step 530 the configuration of the client terminal may be changed by choosing different services provided on the server. These services may be chosen by choosing the check boxes which are linked with the respective services. In step 540 a verification of the chosen service is carried out. The server may, e.g., comprise service type identifiers associated to the received service request and the server may furthermore comprise a list of predetermined access rights and/or terminal capabilities of the requesting terminals, and may then determine whether the received service request is valid or not. Due to the fact that the configuration enabling is done on the server, the operator of the server can determine in advance which client terminal can access the respective services. E.g., it may be determined that the navigation devices produced for a certain car manufacturer may have access to all the services provided on the server, whereas client terminals produced for another car manufacturer may only have limited service access. This can be done by providing a list on the server of the identification number of the client terminal together with service type identifiers associated to each identification number. However, in step 540 the requesting client terminal may also compare the service type identifier associated to the received service response with the stored access rights and/or terminal capabilities in order to determine whether the service response is admissible or not. According to one embodiment of the present invention, the server necessarily comprises the information which kind of service a certain client terminal can request depending on the identification number of the client terminal. According to another embodiment of the present invention the server does not comprise this information, but only comprises the information whether the service the user of the terminal has chosen is free of charge or not and whether the account of the user is covered to choose a service for which money has to be paid. It is obvious, however, that the control of the individual terminals is possible in more detail when the identification number together with allowed services are stored on the server, as for each terminal the operator can determine in advance what services the user of the client terminal can choose.

If the user of the client terminal is allowed to change the configuration and to choose the services, the configuration is updated in step 550. This configuration update can be carried out in different manners. As a first possibility the user of the client terminal gets a message, e.g. an SMS, comprising the information that the user should contact the server 10, so that the configuration udate can be carried out. As a second possibility, the user of the client terminal, i.e. the terminal itself, receives a message, e.g. an SMS, comprising the configuration data. The client terminal is then updated with the new configuration data. Furthermore, as a third possibility, the client terminal receives an SMS which initiates a call of the server, so that the update will take place as soon as a terminal has contacted the server. The call of the server can be, e.g., a WAP call to the client terminal. Last but not least, the user of the client terminal can call the server by himself, the update being carried out after the log-on procedure, without having received a message beforehand.

As mentioned above, the client terminal communicates with the server by using the SMS technology. This means that the client terminal is able to transmit/receive SMS messages and is able to interpret the received SMS.

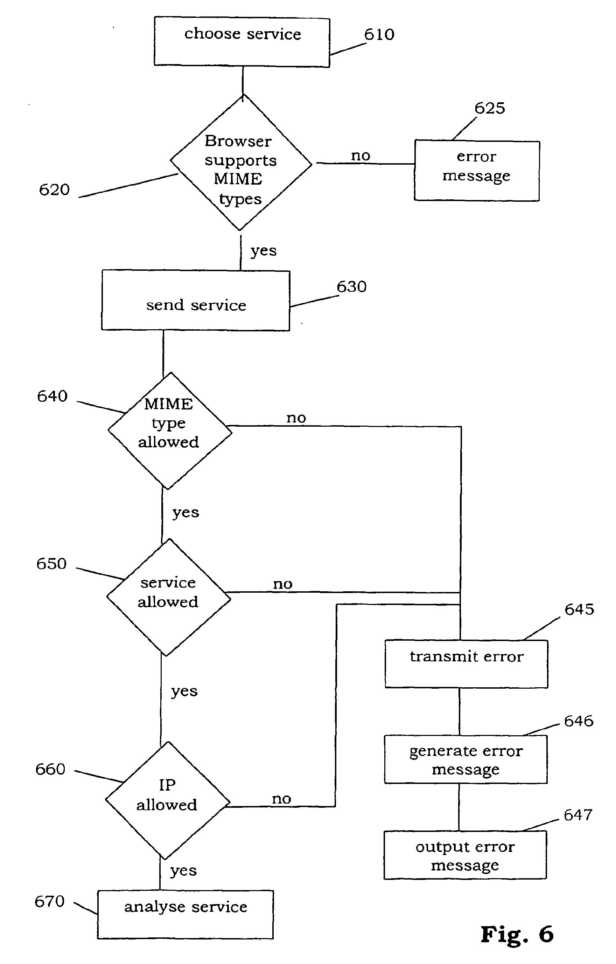

In Fig. 6 the different steps that are carried out after choosing a certain service in the configuration enabling device are shown. When the client terminal contacts the server, the terminal will hand over the MIME Types which it can decode. As it is known to the person skilled in the art the MIME Types inform the user of the transmitted data of the used data format. The transmission of the MIME Types to the server during the log-on procedure helps to define the format of the transmitted configuration data, so that the client terminal will be able to read the data received from the server. After choosing the service in step 610, the server checks whether the transmitted data have the MIME Types which can be decoded by the client terminal (step 620). If this is not the case, an error message is produced in step 625. If the check in step 620 is positive, the server sends the service in step 630 comprising all the data requested from the terminal together with the identification number of the terminal and the service type identifier. In the next steps the client terminal itself will verify the received data. First of all, the terminal itself will check whether the received data together with its MIME Type are allowed. If this is not the case, an error message is transmitted to the server in step 645. An error message is generated on the server in step 646 and output to the client terminal in step 647. If the transmitted MIME Types are allowed, it is asked in step 650 whether the service type identifier associated with the received service response identifies the service as an allowed service. This verification on the side of the client terminal is necessary in order to avoid that the client terminal processes data which the terminal is not able to process, what could cause an undefined status of the terminal or could result in a misinterpretation of data on the terminal. If the service is not allowed, the above described steps 645 to 647 are carried out.

Furthermore, in step 660 the client terminal verifies whether the IP address of the server is allowed. Therefore, the terminal stores server identifiers associated to service type identifiers and compares a received server identifier for a service response with the stored server identifiers associated to the service type identifier of the service response, in order to determine whether the service response is admissible. By step 660 it can be prevented that services originating from other servers and configuration data from other servers are processed on the client terminal. This may be shown by the following example: the service may comprise the order to transmit the position data, calculated by the navigation device, to a server, or may comprise the step of informing the server of a current vehicle status, this information being provided by the navigation device. In order to avoid that these important data are not transmitted to an unauthorized server, the client terminal checks whether the service comes from the right server. If this is the case, the service data are analyzed in step 670, if not an error message is output as described above.

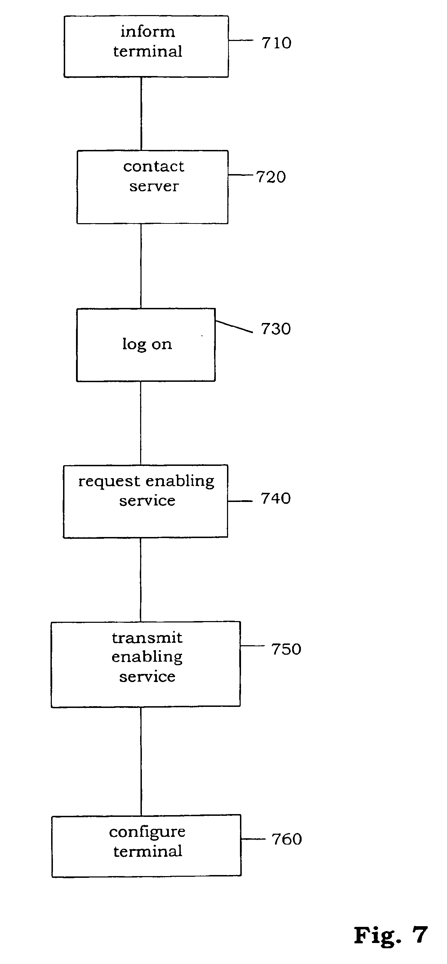

In Fig. 7 another example is shown for controlling this access of client terminals to a server. The client terminal, e.g. a navigation device, is produced by the producer of the navigation device and directly sold to clients in an after-market business, where the clients install the navigation device directly on their cars. Furthermore, the navigation device may be sold to different car manufacturers who sell their vehicles with the navigation device already being incorporated therein right from the start. In this example the client who will buy the vehicle will not necessarily know who is the manufacturer of the navigation device. In the present case it is assumed that either the manufacturer of the navigation device or a certain car manufacturer will have a portal which provides additional information to their clients. If the portal is operated by a certain car manufacturer, it obvious that this manufacturer does not want that other clients of other car manufacturers are able to access the portal and request certain services provided on the portal. In this case, the operator of the portal will store the access rights of the different terminals and will store the identification numbers of the different terminals together with their passwords. In the case that a client terminal originating from another car manufacturer wants to log-on the server, the server denies the access rights of this client terminal. Or, in another example, the car manufacturer wants to differentiate the services provided to each client. E.g., a client who bought a very expensive high end vehicle will be able to access all the services free of charge, whereas another client who bought a small compact car will not be able to access all the services free of charge. In this case, the server will comprise a list with the identification numbers of the terminals and a set of services for each identification number, which are allowed for this identification number. When the client terminal accesses the server, the server checks whether the chosen configuration is valid for this client terminal or not, or whether the client will be charged for the chosen services or not.

However, there may arise the situation where the operator of the portal wants to change the access rights of different client terminals. This may be the case when the manufacturer of the navigation device has made an agreement with a car manufacturer that the latter will be able to use the portal of the manufacturer of the client terminal. Or, this may be the case, when a first car manufacturer may allow a second car manufacturer to use its portal. If this is the case, terminals which up to a certain point of time did not have access rights to the server or to the portal have to be configured in such a way that they will be able to access the terminal. In a first step shown in Fig. 7 the client or terminal which up to this point of time has no access rights is informed that this client terminal will be enabled to use services provided on the portal, if the following procedure is carried out. The information of the user of the client terminal may be done by a letter indicating the identification number of the client terminal together with a password. This information could also be transmitted to the client terminal via an SMS. After having received this information, the client terminal will contact the server in step 720 and will log-on to the server with the information received in step 710 (step 730). On the server there is provided an enabling service for this special group of client terminals which will be enabled to use the services provided on the portal. The user of the client terminal will request this enabling service comprising the configuration data which will enable the client terminal to access the server and to use predetermined services (step 740). This enabling service can be transmitted or downloaded to the navigation device in step 750, and in step 760 the client terminal will be configured with the new configuration data, so that after the finishing step 760 the client terminal which has received the enabling service will be able to use the services provided on the server. This example shows the advantages of the fact of providing configuration data on the server and transmitting them to the client terminal and thereby configuring the client terminal. The operator of the server can control the accessability of different client terminals in a large variety of ways, as he or she can decide the respective access rights for each terminal. The servers therefore determines the service access capabilities of the client terminal. The user of the client terminal may change the configuration of the client terminal, but this change of configuration must always be in accordance with the rights determined by the server for each client terminal. In conclusion, the operator of the server can decide whether a configuration of a client terminal has to be changed or which kind of access rights each terminal has.

## Claims

1. Method for controlling service access of vehicle navigation devices (20) to a server (10), wherein the navigation devices (20) and the server (10) are connected via a telecommunication network (40), the method comprising the steps of:
storing configuration data on the server (10) relating to capabilities of individual navigation devices (20) and/or access rights of individual navigation devices to services provided on the server;
upon generation or modification of configuration data for a navigation device (20) on the server, transmitting the respective configuration data to the navigation device via the telecommunication network (40) and storing the received configuration data in the navigation device (20),
wherein the server checks whether configuration data have been generated or modified, wherein in the affirmative when the navigation device contacts the server next time the generated or changed configuration data are transmitted to the navigation device.

2. Method according to claim 1, further comprising the step of verifying, on the server (10), the admissibility of a service request received from a navigation device (20) based on the associated configuration data and/or access rights; and/or verifying, on the navigation device (20), the admissibility of a service response received from the server (10) based on the stored configuration data.

3. Method according to claim 2, wherein the server (10) compares a service type identifier associated to the received service request with the stored access rights and/or navigation device capabilities of the requesting navigation device (20) in order to determine the admissibility of the service request.

4. Method according to claim 2 or 3, wherein the requesting navigation device (20) compares a service type identifier associated to the received service response with the stored access rights and/or navigation device capabilities in order to determine the admissibility of the service response.

5. Method according to any of the preceding claims, wherein the modified configuration data is transmitted to the corresponding navigation device (20) when the navigation device registers with the server prior to requesting a service.

6. Method according to any of the preceding claims, wherein the modified configuration data is transmitted to the corresponding navigation device (20) by a data messaging service such as, e.g., SMS.

7. Method according to any of the preceding claims, wherein the modified configuration data is transmitted to the corresponding navigation device (20) when the navigation device requests a configuration data update.

8. Method according to claim 7, wherein a message indicating a configuration data modification is sent to the corresponding navigation device, the navigation device initiating a configuration data update request.

9. Method according to any of the preceding claims, wherein the configuration data for a navigation device (20) on the server is modified based on a configuration data editing process performed on the navigation device (20) communicating with the server.

10. Method according to any of the preceding claims, wherein the client navigation device (20) and the server (10) communicate with each other by using the WAP (Wireless Application Protocol) technology.

11. Method according to any of the preceding claims, wherein the configuration data for a navigation device (20) on the server (10) is modified based on a configuration data editing process performed on a different terminal (30) communicating with the server via a second communication network (50).

12. Method according to any of the preceding claims, wherein the first communication network (40) is a telecommunication network and the second communication network (50) is a TCP/IP based communication network.

13. Method according to any of the preceding claims, wherein the navigation device (20) stores server identifiers associated to service type identifiers and compares a received server identifier for a service response with the stored server identifiers associated to the service type identifier of the service response in order to determine the admissibility of the service response.

14. Method according to any of the preceding claims, further comprising the step of checking whether the configuration of the navigation device (20) was changed or whether said navigation device (20) contacted the server for the first time, or whether the navigation device (20) was reset.

15. Method according to claim 14, wherein in the case the navigation device was reset, configuration data comprising a standard configuration is transmitted to the navigation device.

16. Method according to any of the preceding claims, further comprising the step of registering the navigation device (20) at the server (10), the latter step comprising the steps of
- choosing the type of navigation device and transmitting it to the server,
- transmitting an identification number of the navigation device (20) to the server (10),
- generating a login-password by the server (10) and transmitting it to the navigation device (20),
- retaining the login-password on the navigation device (20).

17. Method according to claims 16, wherein the configuration data of registered navigation devices (20) are stored on the server (10) together with the identification number of the navigation device.

18. Method according to claim 16 or 17, wherein after the identification of the navigation device (20) the transmitted identification number and the corresponding password are compared to the respective data stored on the server, and if the transmitted identification number and the corresponding password coincide with the data stored on the server, the navigation device is enabled to change its configuration.

19. Method according to any of the preceding claims, wherein for identifying the client navigation device (20) the following steps are carried out:
- generating an identification service by the server (10),
- transmitting the identification service to the client navigation device (20),
- carrying out the identification service, the identification service requesting an identification number of the navigation device and a password of the navigation device (20),
- transmitting the identification number and the password to the server.

20. Method according to claim 19, wherein the identification number of the client navigation device (20) is retained on the server (10) together with the password of the navigation device.

21. Method according to any of the preceding claims, wherein, for the configuration of the navigation device (20), the user of the navigation device chooses a configuration of the navigation device by choosing the configuration amongst different configuration possibilities provided by the server (10), the server transmitting the chosen configuration data to the navigation device, the navigation device retaining the chosen configuration.

22. Method according to claim 21, wherein the server (10) checks whether the configuration chosen by the user of the client navigation device (20) is valid for said client navigation device by comparing the identification number of the navigation device with a predetermined set of services which are allowed for this identification number.

23. Method according to claim 12 or 13, wherein the transmission of the configuration comprises the step of:
- sending a message to the user, the message containing the information of connecting the navigation device to the server so that the updated configuration data can be transmitted to the client navigation device; or
- sending a message to the client navigation device, the message comprising the updated configuration data, the updated configuration data being automatically retained in the client navigation device; or
- sending a message to the client navigation device, said message initiating a connection to the server, the updated configuration data being transmitted to the client navigation device, or
- building up a connection to the server, initiated by the user of the client navigation device, and transmitting the updated configuration data to the client navigation device.

24. Method according to any of the preceding claims, wherein, during the identification of the client navigation device (20), the client navigation device transmits the MIME types, which it can decode, to the server.

25. Method according to any of the preceding claims wherein the configuration data comprises the services which the navigation device is able to process.

26. Method according to any of the preceding claims, further comprising the steps of:
- informing a navigation device, which has no access rights to services provided on the server, that said navigation device will now be able to access the server, and that an enabling service comprising enabling configuration data is provided on the server,
- accessing the server by the navigation device and requesting said enabling service,
- transmitting the enabling service comprising enabling configuration data to the navigation device,
- configuring the navigation device with the enabling configuration data.

27. System for controlling service access of vehicle navigation devices to a server, wherein the navigation devices and the server are connected via a telecommunication network comprising:
- a first storage unit (11) provided on the server, for storing configuration data relating to capabilities of individual navigation devices and/or access rights of individual navigation devices to services
- an application enabling device (12) provided on the server, which generates configuration data for the client navigation device for enabling, disabling, and/or limiting the capabilities of the individual navigation devices and/or access rights of individual services provided on the server,
- a transmitting/receiving unit (13) for transmitting the configuration data to the client navigation device and for receiving data from the client navigation device, and
- a second storage unit (21) provided on the navigation device for at least storing the transmitted configuration data, wherein the server checks whether configuration data have been checked or modified, wherein in the affirmative, when the navigation device contacts the server the next time, the generated or changed configuration data are transmitted to the navigation device.

28. System according to claim 27, **characterized in that** the first storage unit comprises an identification number and a corresponding password of the navigation device.

29. System according to claim 27 or 28, **characterized in that** the application enabling device comprises different services which can be chosen by the navigation device.

## Patentansprüche

1. Verfahren zum Steuern eines Dienstzugriffs von Fahrzeugnavigationsvorrichtungen (20) auf einen Server (10), wobei die Navigationsvorrichtungen (20) und der Server (10) über ein Telekommunikationsnetz (40) verbunden sind, wobei das Verfahren die Schritte umfasst:
Speichern von Konfigurationsdaten auf dem Server (10), welche Fähigkeiten von einzelnen Navigationsvorrichtungen (20) und/oder Zugriffsrechte von einzelnen Navigationsvorrichtungen auf Dienste, welche auf dem Server bereitgestellt werden, betreffen;
aufgrund eines Erzeugens oder Veränderns von Konfigurationsdaten für eine Navigationsvorrichtung (20) auf dem Server, Übertragen der entsprechenden Konfigurationsdaten zu der Navigationsvorrichtung über das Telekommunikationsnetz (40) und Speichern der empfangenen Konfigurationsdaten in der Navigationsvorrichtung (20), wobei der Server überprüft, ob Konfigurationsdaten erzeugt oder verändert wurden, wobei, wenn dies zutrifft, die erzeugten oder geänderten Konfigurationsdaten zu der Navigationsvorrichtung übertragen werden, wenn die Navigationsvorrichtung das nächste Mal den Server kontaktiert.

2. Verfahren nach Anspruch 1, ferner umfassend den Schritt eines Prüfens auf dem Server (10) der Zulässigkeit einer Dienstanfrage, welche von einer Navigationsvorrichtung (20) empfangen wird, auf der Grundlage der zugeordneten Konfigurationsdaten und/oder Zugriffsrechte; und/oder Prüfen auf der Navigationsvorrichtung (20) der Zulässigkeit einer Dienstantwort, welche von dem Server (10) empfangen wurde, auf der Grundlage der gespeicherten Konfigurationsdaten.

3. Verfahren nach Anspruch 2, wobei der Server (10) eine Dienstartkennzeichnung, welche der empfangenen Dienstanfrage zugeordnet ist, mit gespeicherten Zugriffsrechten und/oder Navigationsvorrichtungsfähigkeiten der anfragenden Navigationsvorrichtung (20) vergleicht, um die Zulässigkeit der Dienstanfrage zu bestimmen.

4. Verfahren nach Anspruch 2 oder 3, wobei die anfragende Navigationsvorrichtung (20) eine Dienstartkennzeichnung, welche der empfangenen Dienstantwort zugeordnet ist, mit den gespeicherten Zugriffsrechten und/oder Navigationsvorrichtungsfähigkeiten vergleicht, um die Zulässigkeit der Dienstantwort zu bestimmen.

5. Verfahren nach einem der vorhergehenden Ansprüche, wobei die veränderten Konfigurationsdaten zu der entsprechenden Navigationsvorrichtung (20) übertragen werden, wenn die Navigationsvorrichtung sich bei dem Server vor einem Anfordern eines Dienstes registriert.

6. Verfahren nach einem der vorhergehenden Ansprüche, wobei die veränderten Konfigurationsdaten zu der entsprechenden Navigationsvorrichtung (20) über einen Datennachrichtendienst, wie z.B. SMS, übertragen werden.

7. Verfahren nach einem der vorhergehenden Ansprüche, wobei die veränderten Konfigurationsdaten zu der entsprechenden Navigationsvorrichtung (20) übertragen werden, wenn die Navigationsvorrichtung eine entsprechende Konfigurationsdatenaktualisierung anfordert.

8. Verfahren nach Anspruch 7, wobei eine Nachricht, welche eine Konfigurationsdatenveränderung anzeigt, zu der entsprechenden Navigationsvorrichtung gesendet wird, wobei die Navigationsvorrichtung eine Konfigurationsdatenaktualisierungsanforderung einleitet.

9. Verfahren nach einem der vorhergehenden Ansprüche, wobei die Konfigurationsdaten für eine Navigationsvorrichtung (20) auf dem Server auf der Grundlage eines Konfigurationsdatenbearbeitungsvorgangs verändert werden, welcher auf der mit dem Server in Verbindung stehenden Navigationsvorrichtung (20) ausgeführt wird.

10. Verfahren nach einem der vorhergehenden Ansprüche, wobei die Kundennavigationsvorrichtung (20) und der Server (10) miteinander durch Verwenden der WAP (Wireless Application Protocol, drahtloses Anwendungsprotokoll) Technologie miteinander in Verbindung stehen.

11. Verfahren nach einem der vorhergehenden Ansprüche, wobei die Konfigurationsdaten für eine Navigationsvorrichtung (20) auf dem Server (10) auf der Grundlage eines Konfigurationsdatenbearbeitungsvorgangs verändert werden, welcher auf einem anderen Endgerät (30) durchgeführt wird, welches mit dem Server über ein zweites Kommunikationsnetz (50) in Verbindung steht.

12. Verfahren nach einem der vorhergehenden Ansprüche, wobei das erste Kommunikationsnetz (40) ein Telekommunikationsnetz ist und das zweite Kommunikationsnetz (50) ein TCP/IP basiertes Kommunikationsnetz ist.

13. Verfahren nach einem der vorhergehenden Ansprüche, wobei die Navigationsvorrichtung (20) Serverkennzeichnungen speichert, welche Dienstartkennzeichnungen zugeordnet sind, und eine empfangene Serverkennzeichnung für eine Dienstantwort mit den gespeicherten Serverkennzeichnungen vergleicht, welche der Dienstartkennzeichnung der Dienstantwort zugeordnet sind, um die Zulässigkeit der Dienstantwort zu bestimmen.

14. Verfahren nach einem der vorhergehenden Ansprüche, ferner umfassend den Schritt eines Überprüfens, ob die Konfiguration der Navigationsvorrichtung (20) geändert wurde oder ob die Navigationsvorrichtung (20) den Server zum ersten Mal kontaktiert hat oder ob die Navigationsvorrichtung (20) zurückgesetzt wurde.

15. Verfahren nach Anspruch 14, wobei in dem Fall, dass die Navigationsvorrichtung zurückgesetzt wurde, Konfigurationsdaten, welche eine Standardkonfiguration umfassen, zu der Navigationsvorrichtung übertragen werden.

16. Verfahren nach einem der vorhergehenden Ansprüche, ferner umfassend den Schritt eines Registrierens der Navigationsvorrichtung (20) bei dem Server (10), wobei der letztgenannte Schritt die Schritte umfasst
- Wählen der Art einer Navigationsvorrichtung und Übertragen dieser zu dem Server,
- Übertragen einer Identifikationsnummer der Navigationsvorrichtung (20) zu dem Server (10),
- Erzeugen eines Anmeldekennworts durch den Server (10) und Übertragen dieses zu der Navigationsvorrichtung (20),
- Speichern des Anmeldekennworts auf der Navigationsvorrichtung (20).

17. Verfahren nach Anspruch 16, wobei die Konfigurationsdaten von registrierten Navigationsvorrichtungen (20) auf dem Server (10) zusammen mit der Identifikationsnummer der Navigationsvorrichtung gespeichert werden.

18. Verfahren nach Anspruch 16 oder 17, wobei nach der Identifikation der Navigationsvorrichtung (20) die übertragene Identifikationsnummer und das entsprechende Kennwort mit entsprechenden auf dem Server gespeicherten Daten verglichen werden und, wenn die übertragene Identifikationsnummer und das entsprechende Kennwort mit den auf dem Server gespeicherten Daten übereinstimmen, der Navigationsvorrichtung ermöglicht wird, ihre Konfiguration zu ändern.

19. Verfahren nach einem der vorhergehenden Ansprüche, wobei zum Identifizieren der Kundennavigationsvorrichtung (20) die folgenden Schritte ausgeführt werden:
- Erzeugen eines Identifikationsdienstes durch den Server (10),
- Übertragen des Identifikationsdienstes zu der Kundennavigationsvorrichtung (20),
- Ausführen des Identifikationsdienstes, wobei der Identifikationsdienst eine Identifikationsnummer der Navigationsvorrichtung und ein Kennwort der Navigationsvorrichtung (20) abfragt,
- Übertragen der Identifikationsnummer und des Kennwortes zu dem Server.

20. Verfahren nach Anspruch 19, wobei die Identifikationsnummer der Kundennavigationsvorrichtung (20) auf dem Server (10) zusammen mit dem Kennwort der Navigationsvorrichtung gespeichert wird.

21. Verfahren nach einem der vorhergehenden Ansprüche, wobei für die Konfiguration der Navigationsvorrichtung (20) der Benutzer der Navigationsvorrichtung eine Konfiguration der Navigationsvorrichtung durch Wählen der Konfiguration aus unterschiedlichen Konfigurationsmöglichkeiten auswählt, welche von dem Server (10) bereitgestellt werden, wobei der Server die gewählten Konfigurationsdaten zu der Navigationsvorrichtung überträgt, wobei die Navigationsvorrichtung die gewählte Konfiguration speichert.

22. Verfahren nach Anspruch 21, wobei der Server (10) überprüft, ob die Konfiguration, welche von dem Benutzer der Kundennavigationsvorrichtung (20) gewählt wurde, für die Kundennavigationsvorrichtung gültig ist, indem die Identifikationsnummer der Navigationsvorrichtung mit einer vorbestimmten Gruppe von Diensten, welche für diese Identifikationsnummer freigegeben sind, verglichen wird.

23. Verfahren nach Anspruch 12 oder 13, wobei die Übertragung der Konfiguration die Schritte umfasst:
- Senden einer Nachricht zu dem Benutzer, wobei die Nachricht die Information eines Verbindens der Navigationsvorrichtung mit dem Server enthält, sodass die aktualisierten Konfigurationsdaten zu der Kundennavigationsvorrichtung übertragen werden können; oder
- Senden einer Nachricht zu der Kundennavigationsvorrichtung, wobei die Nachricht die aktualisierten Konfigurationsdaten umfasst, wobei die aktualisierten Konfigurationsdaten automatisch in der Kundennavigationsvorrichtung gespeichert werden; oder
- Senden einer Nachricht zu der Kundennavigationsvorrichtung, wobei die Nachricht eine Verbindung zu dem Server einleitet, wobei aktualisierte Konfigurationsdaten zu der Kundennavigationsvorrichtung übertragen werden, oder
- Aufbauen einer Verbindung zu dem Server, was von dem Benutzer der Kundennavigationsvorrichtung eingeleitet wird, und Übertragen der aktualisierten Konfigurationsdaten zu der Kundennavigationsvorrichtung.

24. Verfahren nach einem der vorhergehenden Ansprüche, wobei während der Identifikation der Kundennavigationsvorrichtung (20) die Kundennavigationsvorrichtung die MIME-Arten, welche sie dekodieren kann, zu dem Server überträgt.

25. Verfahren nach einem der vorhergehenden Ansprüche, wobei die Konfigurationsdaten die Dienste umfassen, welche die Navigationsvorrichtung in der Lage ist auszuführen.

26. Verfahren nach einem der vorhergehenden Ansprüche, ferner umfassend die Schritte:
- Informieren einer Navigationsvorrichtung, welche keine Zugriffsrechte auf von dem Server bereitgestellte Dienste aufweist, dass die Navigationsvorrichtung nun in der Lage sein wird, auf den Server zuzugreifen, und dass ein Freigabedienst, welcher Freigabekonfigurationsdaten umfasst, auf dem Server bereitgestellt wird,
- Zugreifen auf den Server durch die Navigationsvorrichtung und Abfragen des Freigabedienstes,
- Übertragen des Freigabedienstes, welcher Freigabekonfigurationsdaten umfasst, zu der Navigationsvorrichtung,
- Konfigurieren der Navigationsvorrichtung mit den Freigabekonfigurationsdaten.

27. System zum Steuern eines Dienstzugriffs von Fahrzeugnavigationsvorrichtungen auf einen Server, wobei die Navigationsvorrichtungen und der Server über ein Telekommunikationsnetz verbunden sind, umfassend:
- eine erste Speichereinheit (11), welche auf dem Server vorgesehen ist, zum Speichern von Konfigurationsdaten, welche Fähigkeiten von einzelnen Navigationsvorrichtungen und/oder Zugriffsrechten von einzelnen Navigationsvorrichtungen auf Dienste betreffen,
- eine Anwendungsfreigabevorrichtung (12), welche auf dem Server vorgesehen ist und welche Konfigurationsdaten für die Kundennavigationsvorrichtung zum Freigeben, Sperren und/oder Beschränken der Fähigkeiten der einzelnen Navigationsvorrichtungen und/oder Zugriffsrechte von einzelnen auf dem Server bereitgestellten Diensten erzeugt,
- eine Übertragungs-/Empfangseinheit (13) zum Übertragen der Konfigurationsdaten zu der Kundennavigationsvorrichtung und zum Empfangen von Daten von der Kundennavigationsvorrichtung, und
- eine zweite Speichereinheit (21), welche auf der Navigationsvorrichtung vorgesehen ist, für zumindest ein Speichern der übertragenen Konfigurationsdaten, wobei der Server überprüft, ob Konfigurationsdaten überprüft oder verändert wurden, wobei, falls dies zutrifft, die erzeugten oder geänderten Konfigurationsdaten zu der Navigationsvorrichtung übertragen werden, wenn die Navigationsvorrichtung den Server das nächste Mal kontaktiert.

28. System nach Anspruch 27, **dadurch gekennzeichnet, dass** die erste Speichereinheit eine Identifikationsnummer und ein entsprechendes Kennwort der Navigationsvorrichtung umfasst.

29. System nach Anspruch 27 oder 28, **dadurch gekennzeichnet, dass** die Anwendungsfreigabevorrichtung unterschiedliche Dienste umfasst, welche durch die Navigationsvorrichtung ausgewählt werden können.

## Revendications

1. Procédé de contrôle de l'accès de dispositifs de navigation de véhicule (20) aux services d'un serveur (10), dans lequel les dispositifs de navigation (20) et le serveur (10) sont connectés par l'intermédiaire d'un réseau de télécommunication (40), le procédé comprenant les étapes de:
stocker, sur le serveur (10), des données de configuration relatives à des capacités de dispositifs de navigation individuels (20) et/ou à des droits d'accès de dispositifs de navigation individuels à des services fournis sur le serveur;
après une génération ou modification de données de configuration sur le serveur pour un dispositif de navigation (20), transmettre les données de configuration respectives au dispositif de navigation par l'intermédiaire du réseau de télécommunication (40) et stocker les données de configuration reçues dans le dispositif de navigation (20),
dans lequel le serveur vérifie si des données de configuration ont été générées ou modifiées, dans lequel, dans l'affirmative, lorsque le dispositif de navigation contacte le serveur la prochaine fois, les données de configuration générées ou modifiées sont transmis au dispositif de navigation.

2. Procédé selon la revendication 1, comprenant en outre l'étape de vérifier, sur le serveur (10), l'admissibilité d'une demande de service reçue provenant d'un dispositif de navigation (20), à base des données de configuration et/ou des droits d'accès associés; et/ou de vérifier, sur le dispositif de navigation (20), l'admissibilité d'une réponse de service reçue du serveur (10) à base des données de configuration stockées.

3. Procédé selon la revendication 2, dans lequel le serveur (10) compare un identifiant de type de service associé à la demande de service reçue avec les droits d'accès stockés et/ou les capacités de navigation du dispositif de navigation demandeur (20) pour déterminer l'admissibilité de la demande de service.

4. Procédé selon la revendication 2 ou 3, dans lequel le dispositif de navigation demandeur (20) compare un identifiant de type de service associé à la réponse de service reçue avec les droits d'accès stockés et/ou les capacités du dispositif de navigation pour déterminer l'admissibilité de la réponse de service.

5. Procédé selon l'une quelconque des revendications précédentes, dans lequel les données de configuration modifiées sont transmis au dispositif de navigation (20) correspondant lorsque le dispositif de navigation s'enregistre auprès du serveur avant de demander un service.

6. Procédé selon l'une quelconque des revendications précédentes, dans lequel les données de configuration modifiées sont transmis au dispositif de navigation (20) correspondant par un service de messagerie de données tel que par exemple SMS.

7. Procédé selon l'une quelconque des revendications précédentes, dans lequel les données de configuration modifiées sont transmis au dispositif de navigation (20) correspondant lorsque le dispositif de navigation demande une mise à jour des données de configuration.

8. Procédé selon la revendication 7, dans lequel un message indiquant une modification de données de configuration est envoyé au dispositif de navigation correspondant, le dispositif de navigation initiant une demande de mise à jour de données de configuration.

9. Procédé selon l'une quelconque des revendications précédentes, dans lequel les données de configuration pour un dispositif de navigation (20) sur le serveur sont modifiées à base d'une procédure de mise en forme des données de configuration exécutée sur le dispositif de navigation (20) en communication avec le serveur.

10. Procédé selon l'une quelconque des revendications précédentes, dans lequel le dispositif de navigation client (20) et le serveur (10) communiquent l'un avec l'autre en utilisant la technologie WAP (Wireless Application Protocol).

11. Procédé selon l'une quelconque des revendications précédentes, dans lequel les données de configuration pour un dispositif de navigation (20) sur le serveur (10) sont modifiées à base d'une procédure de mise en forme de données de configuration exécutée sur un terminal différent (30) en communication avec le serveur par l'intermédiaire d'un deuxième réseau de communication (50).

12. Procédé selon l'une quelconque des revendications précédentes, dans lequel le premier réseau de communication (40) est un réseau de télécommunication et le deuxième réseau de communication (50) est un réseau de communication basé sur TCP/IP.

13. Procédé selon l'une quelconque des revendications précédentes, dans lequel le dispositif de navigation (20) stocke des identifiants de serveur associés à des identifiants de type de service, et compare un identifiant de serveur reçu pour une réponse de service avec les identifiants de serveur stockés associés à l'identifiant de type de service de la réponse de service pour déterminer l'admissibilité de la réponse de service.

14. Procédé selon l'une quelconque des revendications précédentes, comprenant en outre l'étape de vérifier si la configuration du dispositif de navigation (20) a été changée, ou si ledit dispositif de navigation (20) a contacté le serveur pour la première fois, ou si le dispositif de navigation (20) à été remis à zéro.

15. Procédé selon la revendication 14, dans lequel, au cas où le dispositif de navigation a été remis à zéro, des données de configuration comprenant une configuration standard sont transmis au dispositif de navigation.

16. Procédé selon l'une quelconque des revendications précédentes, comprenant en outre l'étape d'enregistrer le dispositif de navigation (20) auprès du serveur (10), cette dernière étape comprenant les étapes
- de choisir le type de dispositif de navigation et de le transmettre au serveur,
- de transmettre un numéro d'identification du dispositif de navigation (20) au serveur (10),
- de générer un mot de passe de connexion par le serveur (10) et de le transmettre au dispositif de navigation (20),
- de retenir le mot de passe de connexion sur le dispositif de navigation (20).

17. Procédé selon la revendication 16, dans lequel les données de configuration de dispositifs de navigation enregistrés (20) sont stockées sur le serveur (10) conjointement avec le numéro d'identification du dispositif de navigation.

18. Procédé selon la revendication 16 ou 17, dans lequel, après l'identification du dispositif de navigation (20), le numéro d'identification transmis et le mot de passe correspondant sont comparés avec les données respectives stockées sur le serveur, et si le numéro d'identification transmis et le mot de passe correspondant coïncident avec les données stockées sur le serveur, le dispositif de navigation est autorisé à changer sa configuration.

19. Procédé selon l'une quelconque des revendications précédentes, dans lequel, pour identifier le dispositif de navigation client (20), les étapes suivantes sont exécutées:
- générer un service d'identification par le serveur (10),
- transmettre le service d'identification au dispositif de navigation client (20),
- exécuter le service d'identification, le service d'identification demandant un numéro d'identification du dispositif de navigation et un mot de passe du dispositif de navigation (20),
- transmettre le numéro d'identification et le mot de passe au serveur.

20. Procédé selon la revendication 19, dans lequel le numéro d'identification du dispositif de navigation client (20) est retenu sur le serveur (10) conjointement avec le mot de passe du dispositif de navigation.

21. Procédé selon l'une quelconque des revendications précédentes, dans lequel, pour la configuration du dispositif de navigation (20), l'utilisateur du dispositif de navigation choisit une configuration du dispositif de navigation en choisissant la configuration parmi des possibilités différentes de configuration fournies par le serveur (10), le serveur transmettant les données de configuration choisies au dispositif de navigation, le dispositif de navigation retenant la configuration choisie.

22. Procédé selon la revendication 21, dans lequel le serveur (10) vérifie si la configuration choisie par l'utilisateur du dispositif de navigation client (20) est valide pour ledit dispositif de navigation client en comparant le numéro d'identification du dispositif de navigation avec un ensemble prédéterminé de services qui sont permis pour ce numéro d'identification.

23. Procédé selon la revendication 12 ou 13, dans lequel la transmission de la configuration comprend l'étape:
- d'envoyer un message à l'utilisateur, le message contenant l'information de connecter le dispositif de navigation au serveur pour que les données de configuration mises à jour puissent être transmises au dispositif de navigation client; ou
- d'envoyer un message au dispositif de navigation client, le message comprenant les données de configuration mises à jour, les données de configuration mises à jour étant automatiquement retenues dans le dispositif de navigation client; ou
- d'envoyer un message au dispositif de navigation client, ledit message initiant une connexion au serveur, les données de configuration mises à jour étant transmises au dispositif de navigation client, ou
- d'établir une connexion au serveur, initiée par l'utilisateur du dispositif de navigation client, et de transmettre les données de configuration mises à jour au dispositif de navigation client.

24. Procédé selon l'une quelconque des revendications précédentes, dans lequel, au cours de l'identification du dispositif de navigation client (20), le dispositif de navigation client transmet au serveur les types MIME qu'il peut décoder.

25. Procédé selon l'une quelconque des revendications précédentes, dans lequel les données de configuration comprennent les services que le dispositif de navigation est apte à traiter.

26. Procédé selon l'une quelconque des revendications précédentes, comprenant en outre les étapes:
- d'informer un dispositif de navigation, qui n'a pas de droits d'accès à des services fournis sur le serveur, que ledit dispositif de navigation sera maintenant apte à accéder au serveur, et qu'un service d'activation comprenant des données d'activation de configuration est fourni sur le serveur,
- d'accéder au serveur par le dispositif de navigation et de demander ledit service d'activation,
- de transmettre au dispositif de navigation le service d'activation comprenant des données d'activation de configuration,
- de configurer le dispositif de navigation avec les données d'activation de configuration.

27. Système de contrôle de l'accès de dispositifs de navigation de véhicule aux services d'un serveur, dans lequel les dispositifs de navigation et le serveur sont connectés par l'intermédiaire d'un réseau de télécommunication, comprenant:
- une première unité de stockage (11) fournie sur le serveur, pour stocker des données de configuration relatives à des capacités de dispositifs de navigation individuels et/ou à des droits d'accès de dispositifs de navigation individuels à des services,
- un dispositif d'activation d'application (12) fourni sur le serveur, qui génère des données de configuration pour le dispositif de navigation client pour activer, désactiver, et/ou limiter les capacités des dispositifs de navigation individuels et/ou les droits d'accès à des services individuels fournis sur le serveur,
- une unité de transmission/réception (13) pour transmettre les données de configuration au dispositif de navigation client et pour recevoir des données du dispositif de navigation client, et
- une deuxième unité de stockage (21) fournie sur le dispositif de navigation pour stocker au moins les données de configuration transmises, dans lequel le serveur vérifie si des données de configuration ont été vérifiées ou modifiées, dans lequel, dans l'affirmative, lorsque le dispositif de navigation contacte le serveur la prochaine fois, les données de configuration générées ou changées sont transmises au dispositif de navigation.

28. Système selon la revendication 27, **caractérisé en ce que** la première unité de stockage comprend un numéro d'identification et un mot de passe correspondant du dispositif de navigation.

29. Système selon la revendication 27 ou 28, **caractérisé en ce que** le dispositif activant l'application comprend des services différents qui peuvent être choisis par le dispositif de navigation.
